# EUROPÄISCHE PATENTSCHRIFT

(11) **EP 3 604 038 B1**
(45) Veröffentlichungstag und Bekanntmachung des Hinweises auf die Patenterteilung: **14.04.2021**
(21) Anmeldenummer: 19189515.0
(22) Anmeldetag: 01.08.2019
(51) Int. Cl.: B60N 3/10

(54) **HALTEVORRICHTUNG ZUR AUFNAHME VON GEGENSTÄNDEN, FAHRZEUGSITZ**
HOLDING DEVICE FOR RECEIVING OBJECTS, VEHICLE SEAT
DISPOSITIF DE RETENUE PERMETTANT DE RECEVOIR DES OBJETS, SIÈGE DE VÉHICULE

(30) Priorität: 02.08.2018 DE 102018212935
(43) Veröffentlichungstag der Anmeldung: 05.02.2020
(73) Patentinhaber: Volkswagen Aktiengesellschaft, 38440 Wolfsburg (DE)
(72) Erfinder: Nannen, Lars, 38442 Wolfsburg (DE)

(56) Entgegenhaltungen:
- DE-A1-102008 027 792
- DE-A1-102015 113 588
- US-A- 4 212 377

## Beschreibung

Die Erfindung betrifft eine Haltervorrichtung zur Aufnahme von Gegenständen, insbesondere für ein Kraftfahrzeug, mit einem Trägerelement, insbesondere Rückenlehne des Fahrzeugsitzes, und mit einem an dem Trägerelement angeordneten Taschenelement, das an seinem Außenrand zumindest abschnittsweise an dem Trägerelement dauerhaft derart befestigt ist, dass zwischen dem Taschenelement und dem Trägerelement eine einseitig offene Aufnahmetasche ausgebildet ist.

Weiterhin betrifft die Erfindung einen Fahrzeugsitz für ein Kraftfahrzeug, der eine derartige Haltevorrichtung aufweist.

Haltevorrichtungen und Fahrzeugsitze der eingangs genannten Art sind aus dem Stand der Technik bereits bekannt. So offenbart beispielweise die Offenlegungsschrift DE 102 20 576 A1 einen Fahrzeugsitz, an dessen Rückenlehne eine Haltevorrichtung ausgebildet ist, wobei die Haltevorrichtung entfernbare Taschenelemente aufweist, durch welche die Haltevorrichtung herstellbar oder demontierbar ist. Aus der Offenlegungsschrift DE 20 2014 103 474 U1 ist eine weitere Haltevorrichtung für einen Fahrzeugsitz bekannt, die sich dadurch auszeichnet, dass sie eine in der Aufnahmetasche angeordnete oder ausgebildete zweite Aufnahmetasche versteckt aufweist. Weiterhin geht aus der Offenlegungsschrift US2014/0062147 A1 eine Haltevorrichtung für ein Fahrzeugsitz hervor, die ein elastisch verformbares Zwischenteil zur einfachen Anpassung der Aufnahmetasche an unterschiedliche Gegenstände aufweist. Zudem offenbart die Offenlegungsschrift DE 10 2015 113 588 A1 einen Sitzbezug für einen Fahrzeugsitz, der eine seitlich an dem Fahrzeugsitz angeordnete Einschubtasche aufweist.

Der Erfindung liegt die Aufgabe zugrunde, eine verbesserte Haltevorrichtung zu schaffen, welche eine vielseitige Verwendung sowie das sichere Aufbewahren unterschiedlicher Gegenstände gewährleistet.

Die der Erfindung zugrundeliegende Aufgabe wird durch eine Haltervorrichtung mit den Merkmalen des Anspruchs 1 gelöst. Diese hat den Vorteil, dass mehrere Taschenabschnitte vorhanden sind, die vom Benutzer wahlweise miteinander verbunden oder voneinander getrennt werden können, um beispielsweise mehrere schmale Gegenstände in einzelnen Taschenabschnitte unterzubringen, oder einen größeren Gegenstand derart, dass er sich über mehrere Taschenabschnitte hinweg erstreckt. Dadurch ist die Aufnahmetasche vorteilhaft an die Bedürfnisse des Benutzers anpassbar. So können beispielsweise in einen Taschenabschnitt ein Mobiltelefon und in den benachbarten Taschenabschnitt ein Werkzeug, eine Straßenkarte oder dergleichen eingesteckt werden, oder alternativ ein Tablet-Computer, der sich über die gesamte Breite der Aufnahmetasche und damit über beide Taschenabschnitte hinweg erstreckt. Dies wird dadurch erreicht, dass erfindungsgemäß zwischen dem Trägerelement und dem Taschenelement zumindest eine lösbare Verbindung ausgebildet ist, die beabstandet zu dem Außenrand des Taschenelements liegt, um die Aufnahmetasche in miteinander verbindbare Taschenabschnitte zu unterteilen. Ist die Verbindung hergestellt, liegen in der Aufnahmetaschen somit benachbarte Taschenabschnitte vor, die durch die Verbindung voneinander getrennt sind. Wird diese Verbindung vom Benutzer gelöst, werden die benachbarten Taschenabschnitte miteinander verbunden und damit die Volumen der beiden Taschenabschnitte zusammengeführt, sodass ein größerer Gegenstand von der Aufnahmetasche aufgenommen und gehalten werden kann.

Gemäß einer bevorzugten Ausbildung der Erfindung ist die Verwendung als Klettschlussverbindung ausgebildet. Diese ist kostengünstig und für den Benutzer einfach zu bedienen in der Aufnahmetasche ausbildbar. Dazu ist ein erster Klettstreifen an dem Trägerelement und ein zweiter Klettstreifen, dem ersten Klettstreifen gegenüberliegend, an dem Taschenelement angeordnet und befestigt, sodass die Klettelemente miteinander wirkend die Verbindung herstellen und durch voneinander Wegziehen durch den Benutzer die Verbindung lösen.

Alternativ ist die Verbindung als Rasterverbindung ausgebildet. Diese formschlüssige Verbindung erlaubt ebenfalls eine einfache Bedienung durch den Benutzer, bedingt jedoch im Vergleich zur Klettverschlussverbindung einer präzisere Führung des Taschenelements im Bereich der Verbindung, um die Verbindung herstellen zu können. Beispielsweise weist die Rastverbindung eine an dem Trägerelement ausgebildete Rastaufnahme und einen an dem Taschenelement ausgebildeter Rastvorsprung auf, der unter elastischer Verformung in die Rastaufnahme einbringbar ist, um diese dort einen Hintergriffsitz zu bilden und formschlüssig das Taschenelement im Bereich der Verbindung an dem Trägerelement zu halten und dadurch die benachbarten Taschenabschnitte zu bilden.

Alternativ ist die Verbindung als Klemmverbindung ausgebildet. Im Unterschied zu der Rastverbindung wird dabei auf eine formschlüssige Verbindung verzichtet, wodurch ein einfaches Herstellen und Lösen der Verbindung gewährleistet ist. Beispielweise weist das Trägerelement dazu eine Klemmaufnahme auf, in welche ein keilförmiger Klemmvorsprung des Taschenelements einführbar ist bis durch die erreichte Anpresskraft eine Selbsthemmung erreicht ist, die vom Benutzer durch Aufbringen einer ausreichenden Zugkraft jedoch gelöst werden kann.

Erfindungsgemäß ist die Verbindung streifenförmig ausgebildet, um einen Verbindungsstreifen zwischen Taschenelement und Trägerelement herzustellen, durch welchen die benachbarten Taschenabschnitte vorteilhaft voneinander separierbar sind.

Bevorzugt weist das Taschenelement einen U-förmigen Außenrandabschnitt auf, entlang dessen das Taschenelement an dem Trägerelement befestigt ist. Dadurch verbleibt ein freier Randabschnitt, welcher die Taschenöffnung und damit den Zugang zu der Aufnahmetasche bietet. Dadurch, dass das Taschenelement U-förmig an dem Trägerelement befestigt ist, ergibt sich eine sichere Befestigung der Aufnahmetasche an beispielsweise dem Fahrzeugsitz einerseits, und das sichere Aufnehmen von Gegenständen in der Aufnahmetasche andererseits. Insbesondere weist der freie Außenrandabschnitt des Taschenelements nach oben, sodass ein ungewolltes Herausfallen von Gegenständen aus der Aufnahmetasche sicher verhindert ist.

Weiterhin ist bevorzugt vorgesehen, dass das Taschenelement an dem Trägerelement entlang des Außenrandabschnitts vernäht und/oder verklebt ist. Hierdurch ergibt sich eine besonders sichere und belastbare Verbindung zwischen Trägerelementen und Taschenelement, die eine lange Haltbarkeit der Haltevorrichtung gewährleisten.

Weiterhin sind gemäß einer bevorzugten Weiterbildung mehrere Verbindungen beabstandet zueinander zwischen Trägerelement und Taschenelement vorhanden oder ausgebildet, um mindestens drei miteinander verbindbare Taschenabschnitte zu bilden. Sind die Verbindungen hergestellt, bestehen somit zumindest drei Taschenabschnitte zur Verfügung, welche von dem Benutzer durch unterschiedliche Gegenstände gefüllt werden können. Werden die Verbindungen gelöst, ist die Aufnahmetasche insgesamt auch durch einen einzigen Gegenstand ausfüllbar, der sich über die mehreren Taschenabschnitte hinweg erstreckt.

Der erfindungsgemäße Fahrzeugsitz mit den Merkmalen des Anspruchs 9 zeichnet sich durch die erfindungsgemäße Haltevorrichtung aus. Ergeben sich hierdurch die bereits genannten Vorteile. Die Haltevorrichtung kann dabei an unterschiedlichen Stellen des Fahrzeugsitzes angebracht sein, wie beispielsweise an der Seitenwand einer Rückenlehne oder im Bereich der Kniekehle eines Benutzers.

Besonders bevorzugt ist das Trägerelement durch die Rückenlehne gebildet, sodass die Haltevorrichtung an der Rückenlehne angeordnet ist. Dadurch ist die Haltevorrichtung einfach von einer Person nutzbar, die sich hinter dem Fahrzeugsitz, beispielsweise auf einem Rücksitz, befindet.

Weitere Vorteile und bevorzugte Merkmale und Merkmalskombinationen ergeben sich insbesondere aus dem zuvor Beschriebenen sowie aus den Ansprüchen. Im Folgenden soll die Erfindung an der Zeichnung näher erläutert werden. Dazu zeigen
- Figur 1: einen vorteilhaften Fahrzeugsitz in einer vereinfachten perspektivischen Darstellung gemäß einem ersten Ausführungsbeispiel und
- Figur 2: den Fahrzeugsitz in einer perspektivischen Darstellung gemäß einem zweiten Ausführungsbeispiel.

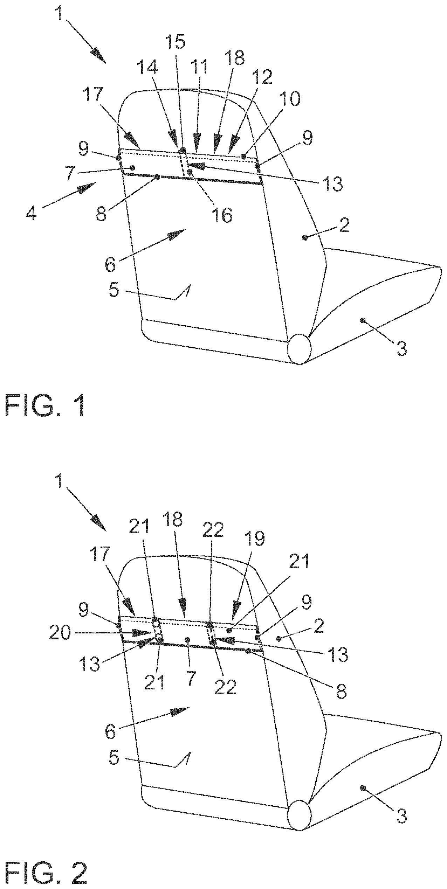

Figur 1 zeigt in einer perspektivischen Darstellung vereinfacht einen Fahrzeugsitz 1 für ein hier nicht näher dargestelltes Kraftfahrzeug. Der Fahrzeugsitz 1 weist eine Rückenlehne 2, sowie ein Sitzteil 3 auf. Die Rückenlehne 2 ist beispielweise an dem Sitzteil 3 verschwenkbar gehalten, um für den Benutzer des Fahrzeugsitzes 1 möglichst hohen Komfort und Sicherheit zu gewährleisten.

An der Rückenlehne 2 ist außerdem eine Haltevorrichtung 4 angeordnet, die auf einer von dem Sitzteil 3 abgewandten Rückseite 5 der Rückenlehne 2 angeordnet ist. Dabei bildet die Rückseite 5 der Rückenlehne 2 ein Trägerelement 6 der Haltervorrichtung 4. Die Haltevorrichtung 4 weist weiterhin ein Taschenelement 7 auf, das an dem Trägerelement 6 befestigt ist.

Das Taschenelement 7 ist vorliegend streifenförmig ausgebildet, sodass es sich quer über die Rückseite 5 erstreckt. An seinem Außenrand ist das Taschenelement 7 abschnittsweise dauerhaft mit dem Trägerelement 6 verbunden. Dazu ist das Taschenelement 7 vorliegend U-förmig durch einen horizontalen unteren Außenrandabschnitt 8 und zwei davon sich vertikal nach oben erstreckenden Seitenrandabschnitten 9 an dem Trägerelement 6 vernäht und/oder verklebt. Damit verbleibt ein freier Außenrandabschnitt 10, der zwischen dem Taschenelement 7 und dem Trägerelement 6 eine Aufnahmeöffnung 11 der zwischen Taschenelement 7 und Trägerelement 7 gebildeten Aufnahmetasche 12 ausbildet.

Zwischen dem Taschenelement 7 und dem Trägerelement 6 ist außerdem eine lösbare Verbindung 13 ausgebildet. Diese ist mittig zwischen dem seitlichen Außenrandabschnitt 9 und somit beabstandet zu diesem in der Aufnahmetasche 12 angeordnet. Die Verbindung 13 ist dabei streifenförmig ausgebildet und erstreckt sich insbesondere parallel zu dem seitlichen Außenrandabschnitt 9 und damit zumindest im Wesentlichen vertikal.

Gemäß dem vorliegenden Ausführungsbeispiel ist die Verbindung 3 als Klettverschlussverbindung 14 ausgebildet. Dazu ist an dem Trägerelement 6 ein erster Klettstreifen 15 und an der Innenseite beziehungsweise an der dem Trägerelement 6 zugewandten Seite des Taschenelements 7 ein zweiter Klettstreifen 16 angeordnet. Die Klettstreifen 15, 16 liegen einander gegenüber und können dadurch die Verbindung 13 herstellen, wenn der Benutzer den Klettstreifen 16 auf den Klettstreifen 15 aufdrückt. Durch Aufbringen einer ausreichend hohen Zugkraft kann der Benutzer die Verbindung 13 ebenso einfach wieder lösen.

Ist die Verbindung 13 hergestellt, wie in Figur 1 beispielhaft gezeigt, so unterteilt die Verbindung 13 die Aufnahmetasche 12 in zwei benachbarte Taschenabschnitte 17 und 18. Löst der Benutzer die Verbindung 13, so werden die Taschenabschnitte 17 und 18 miteinander verbunden und die Aufnahmetasche 12 ist insgesamt beziehungsweise durchgehend benutzbar.

So kann beispielsweise im hergestellten Zustand der Verbindung 13 in den Taschenabschnitt 17 ein Mobilfunkgerät und in den Taschenabschnitt 18 eine Sonnenbrille, ein Spiegel oder dergleichen eingesteckt werden, während im getrennten oder gelösten Zustand der Verbindung 13 ein größerer Gegenstand, der sich über beide Taschenabschnitte 17, 18 hinweg erstreckt, in die Aufnahmetasche 12 eingesteckt und dort gehalten werden kann.

Figur 2 zeigt ein weiteres Ausführungsbeispiel der Erfindung, das sich von dem vorhergehenden Ausführungsbeispiel dadurch unterscheidet, dass mehrere Verbindungen 13 beabstandet zueinander in der Aufnahmetasche, wie zuvor beschrieben, ausgebildet sind.

Dadurch entsteht ein weiterer Taschenabschnitt 19 und eine Dreiteilung der Aufnahmetasche 12.

Der Benutzer kann nun eine oder beide Verbindungen 13 lösen, um die Aufnahmetasche 12 zu nutzen. Löst der Benutzer beispielsweise nur eine der Verbindungen 13, so erhält er einen breiten Taschenabschnitt, der sich beispielsweise aus den Taschenabschnitten 17 und 18 ergibt, sowie einen schmaleren danebenliegenden Taschenabschnitt 19. Löst er beide Verbindungen 13 ergibt sich wieder die Aufnahmekapazität der vollen Aufnahmetasche 12.

Alternativ zu der Ausbildung der Verbindung 13 durch einen Klettverschluss ist gemäß einem weiteren Ausführungsbeispiel vorgesehen, dass die jeweilige Verbindung 13 durch eine Rastverbindung 20 hergestellt ist, wie in Figur 2 an der Verbindung 13 beispielhaft gezeigt. Dabei weist die Rastverbindung 20 gemäß dem vorliegenden Ausführungsbeispiel mehrere Druckknöpfe 21 auf, die in einer Reihe hintereinanderliegend angeordnet sind, um ein streifenförmige Verbindung 13 darzustellen. Die Druckknöpfe 21 wissen jeweils ein an dem Taschenelement 7 angeordnetes Knopfteil und ein an dem Trägerelement 6 angeordnetes Knopfteil auf, die durch elastische Verformung miteinander formschlüssig verbindbar und voneinander lösbar sind.

Gemäß einem weiteren Ausführungsbeispiel wird die jeweilige Verbindung 13 durch eine Klemmverbindung 21 gebildet, wie in Figur 2 an der an der anderen der Verbindungen 13 beispielhaft gezeigt. Dazu weist das Taschenelement 7 beispielsweise mehrere Klemmvorsprünge, insbesondere stegförmige Klemmvorsprünge 22 auf, die in entsprechend stegförmige Klemmaufnahmen, in Figur 2 nicht ersichtlich, einsteckbar sind. Dabei sind die Klemmvorsprünge und/oder die Klemmaufnahmen bevorzugt keilförmig im Längsschnitt ausgebildet, sodass durch das Einstecken der Klemmvorsprünge in die Klemmaufnahmen eine Haltekraft erzeugt wird, die derart selbsthemmend wirkt, dass sich die Verbindung 13 nicht von selbst löst, vom Benutzer unter Aufbringen einer ausreichenden Zugkraft jedoch gelöst werden kann.

Die hier vorgestellte Haltevorrichtung 4 ist vielseitig anwendbar und vom Benutzer einfach bedienbar. Die dargelegten Ausführungsbeispiele der Verbindungen 13 können auch miteinander kombiniert werden. Auch ist es denkbar, die Haltevorrichtung 4 nicht an der Rückseite der Rückenlehne 2 vorzusehen, sondern beispielsweise an einer Seitenfläche oder auch an dem Sitzteil 3, insbesondere im Bereich der Kniekehle einer auf dem Fahrzeugsitz 1 befindlichen Person.

### Bezugszeichenliste

- 1: Fahrzeugsitz
- 2: Rückenlehne
- 3: Sitzteil
- 4: Haltevorrichtung
- 5: Rückseite
- 6: Trägerelement
- 7: Taschenelement
- 8: Außenrandabschnitt
- 9: Seitenrandabschnitt
- 10: Außenrandabschnitt
- 11: Aufnahmeöffnung
- 12: Aufnahmetasche
- 13: Verbindung
- 14: Klettschlussverbindung
- 15: Klettstreifen
- 16: Klettstreifen
- 17: Taschenabschnitt
- 18: Taschenabschnitt
- 19: Taschenabschnitt
- 20: Rastverbindung
- 21: Klemmverbindung
- 22: Klemmvorsprung

## Patentansprüche

1. Haltevorrichtung (4) zur Aufnahme von Gegenständen, insbesondere für ein Kraftfahrzeug, mit einem Trägerelement (6), insbesondere Rückenlehne (2) eines Fahrzeugsitzes (1), und mit einem an dem Trägerelement (6) angeordneten Taschenelement (7), das an seinem Außenrand zumindest abschnittsweise an dem Trägerelement (6) dauerhaft derart befestigt ist, dass zwischen dem Taschenelement (7) und dem Trägerelement (6) eine einseitig offene Aufnahmetasche (12) ausgebildet ist, **dadurch gekennzeichnet, dass** zwischen dem Trägerelement (6) und dem Taschenelement (7) zumindest eine lösbare Verbindung (13) ausgebildet ist, die beabstandet zu dem Außenrand des Taschenelements liegt, um die Aufnahmetasche (12) in miteinander verbindbare Taschenabschnitte (17,18,19) zu unterteilten, wobei die jeweilige Verbindung (13) streifenförmig ausgebildet ist.

2. Haltevorrichtung nach Anspruch 1, **dadurch gekennzeichnet, dass** die Verbindung (13) als Klettschlussverbindung (14) ausgebildet ist.

3. Haltevorrichtung nach Anspruch 1, **dadurch gekennzeichnet, dass** die Verbindung als Rastverbindung (20) ausgebildet ist.

4. Haltevorrichtung nach Anspruch 1, **dadurch gekennzeichnet, dass** die Verbindung als Klemmverbindung (21) ausgebildet ist.

5. Haltevorrichtung nach einem der vorhergehenden Ansprüche, **dadurch gekennzeichnet, dass** das Taschenelement (7) einen U-förmigen Außenrandabschnitt aufweist, entlang dessen das Taschenelement (7) an dem Trägerelement (6) befestigt ist.

6. Haltevorrichtung nach einem der vorhergehenden Ansprüche, **dadurch gekennzeichnet, dass** das Taschenelement (7) an dem Trägerelement (6) entlang des Außenrandabschnitts vernäht und/oder verklebt ist.

7. Haltevorrichtung nach einem der vorhergehenden Ansprüche, **dadurch gekennzeichnet, dass** mehrere Verbindungen (13) beabstandet zueinander zwischen Trägerelement (6) und Taschenelement (7) vorhanden sind, und mindestens drei miteinander verbindbare Taschenabschnitte (17,18,19) zu bilden.

8. Fahrzeugsitz (1), insbesondere für ein Kraftfahrzeug, **gekennzeichnet durch** eine Haltevorrichtung (4) nach einem der Ansprüche 1 bis 7.

9. Fahrzeugsitz nach Anspruch 8, **dadurch gekennzeichnet, dass** er eine Rückenlehne (2) aufweist, die das Trägerelement (6) bildet.

## Claims

1. Holding device (4) for accommodating articles, in particular for a motor vehicle, having a carrier element (6), in particular a backrest (2) of a vehicle seat (1), and having a pocket element (7), which is arranged on the carrier element (6) and has at least part of its outer edge fastened permanently on the carrier element (6) such that an accommodating pocket (12) which is open on one side is formed between the pocket element (7) and the carrier element (6), **characterized in that** at least one releasable connection (13) is formed between the carrier element (6) and the pocket element (7), and said connection is spaced apart from the outer edge of the pocket element in order to subdivide the accommodating pocket (12) into interconnectable pocket portions (17, 18, 19), wherein the respective connection (13) is in strip form.

2. Holding device according to Claim 1, **characterized in that** the connection (13) is in the form of a hook-and-loop connection (14).

3. Holding device according to Claim 1, **characterized in that** the connection is in the form of a latching connection (20).

4. Holding device according to Claim 1, **characterized in that** the connection is in the form of a clamping connection (21).

5. Holding device according to one of the preceding claims, **characterized in that** the pocket element (7) has a U-shaped outer-edge portion, along which the pocket element (7) is fastened on the carrier element (6).

6. Holding device according to one of the preceding claims, **characterized in that** the pocket element (7) is sewn and/or adhesively bonded on the carrier element (6) along the outer-edge portion.

7. Holding device according to one of the preceding claims, **characterized in that** a plurality of connections (13) are spaced apart from one another between the carrier element (6) and pocket element (7) and to form at least three interconnectable pocket portions (17, 18, 19).

8. Vehicle seat (1), in particular for a motor vehicle, **characterized by** a holding device (4) according to one of Claims 1 to 7.

9. Vehicle seat according to Claim 8, **characterized in that** it has a backrest (2), which forms the carrier element (6).

## Revendications

1. Dispositif de retenue (4) pour recevoir des objets, en particulier pour un véhicule automobile, comprenant un élément de support (6), en particulier un dossier (2) d'un siège de véhicule (1) et un élément de poche (7) disposé au niveau de l'élément de support (6), qui est fixé de manière permanente, au moins en partie, au niveau de son bord extérieur à l'élément de support (6) de telle sorte qu'entre l'élément de poche (7) et l'élément de support (6) soit réalisée une poche de réception (12) ouverte d'un côté, **caractérisé en ce qu'**entre l'élément de support (6) et l'élément de poche (7) est réalisée au moins une connexion amovible (13) qui est située à distance du bord extérieur de l'élément de poche afin de diviser la poche de réception (12) en portions de poche (17, 18, 19) pouvant être connectées les unes aux autres, la connexion respective (13) étant réalisée sous forme de bande.

2. Dispositif de retenue selon la revendication 1, **caractérisé en ce que** la connexion (13) est réalisée sous forme de connexion à bande de type Velcro (14) .

3. Dispositif de retenue selon la revendication 1, **caractérisé en ce que** la connexion est réalisée sous forme de connexion par encliquetage (20).

4. Dispositif de retenue selon la revendication 1, **caractérisé en ce que** la connexion est réalisée sous forme de connexion par serrage (21).

5. Dispositif de retenue selon l'une quelconque des revendications précédentes, **caractérisé en ce que** l'élément de poche (7) présente une portion de bord extérieur en forme de U le long de laquelle l'élément de poche (7) est fixé à l'élément de support (6).

6. Dispositif de retenue selon l'une quelconque des revendications précédentes, **caractérisé en ce que** l'élément de poche (7) est cousu et/ou est collé à l'élément de support (6) le long de la portion de bord extérieur.

7. Dispositif de retenue selon l'une quelconque des revendications précédentes, **caractérisé en ce que** plusieurs connexions (13) sont prévues à distance les unes des autres entre l'élément de support (6) et l'élément de poche (7) et de former au moins trois portions de poche (17, 18, 19) pouvant être connectées les unes aux autres.

8. Siège de véhicule (1) en particulier pour un véhicule automobile, **caractérisé par** un dispositif de retenue (4) selon l'une quelconque des revendications 1 à 7.

9. Siège de véhicule selon la revendication 8, **caractérisé en ce qu'il** présente un dossier (2) qui forme l'élément de support (6).
